# EUROPEAN PATENT APPLICATION

(11) **EP 1 091 277 A1**
(43) Date of publication of application: **11.04.2001**
(21) Application number: 00118774.9
(22) Date of filing: 30.08.2000
(51) Int. Cl.: G06F 1/16

(54) **Speaker enclosure for a handheld electronic device**

(30) Priority: 30.09.1999 JP 27778399
(71) Applicant: KABUSHIKI KAISHA TOSHIBA, Kawasaki-shi, Kanagawa-ken 210-8572 (JP)
(72) Inventor: Yoneda, Kiyokazu, 1-1 Shibaura 1-chome Minato-ku Tokyo 105 (JP)
(74) Representative: Henkel, Feiler, Hänzel

(57) **Abstract**

An apparatus and method for releasing sufficient and fine sound from a handheld electronic device of a thin housing body which includes an opening for mounting a keyboard panel and a sound releasing acoustic structure. The handheld electronic device is comprised of a rotatable display unit provided along one edge of an upper surface of the housing body so as to cover an upper surface of the thin housing body when the handheld electronic device is closed. The sound releasing acoustic structure provided in the thin housing body is comprised of a first sound opening provided in the upper surface of the housing body and a second sound opening provided in a side wall of the housing body for releasing sound even when the rotatable display unit is closed.

## Description

### BACKGROUND OF THE INVENTION

### Field of the Invention

The present invention relates to apparatus and method for releasing sufficient volume of sound from the handheld electronic device having a rotatable display.

More particularly, the present invention relates to apparatus and method for releasing sufficient volume of sound from the handheld electronic device through a sound releasing acoustic structure even when the rotatable display is closed on a main housing body of the electronic device.

As used herein, the term "handheld" is intended to be synonymous with "personal use type", such as "laptop", "book-type" or "notebook type". Thus, the term "handheld computer" would include a "personal use type computer", such as a "laptop computer", a "book-type computer" or "a notebook type computer", for example.

### Discussion of the Related Art

Recently, there has been strongly demand for utilizing a thin body handheld electronic device, such as a handheld computer and a mobile electronic device, as a tool for releasing fine sound reproduced through multimedia, such as a CD-ROM(Compact Disc Read-Only-Memory), or a DVD(Digital Versatile Disc)-ROM or sound obtained through the Internet.

Thus, for utilizing as an apparatus for reproducing fine sound data supplied through multimedia such as a CD-ROM, a DVD-ROM or the Internet, there has recently been strong demand for installing a speaker of high performance in a handheld computer.

However, even though such a high performance speaker has installed in the handheld electronic device, it is still impossible to obtain the fine sound. For example, if the handheld electronic device has a rotatable display attached on a thin main body, it is still impossible to work as a good sound reproducing apparatus for supplying such a fine sound with a sufficient volume and a good tone when the display unit is closed so as to cover over the upper surface of the main body for the handheld electronic device.

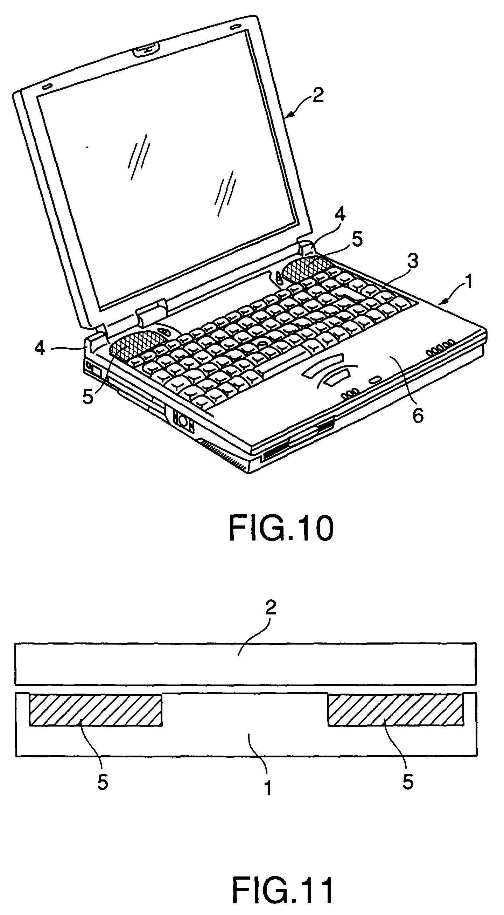

Conventionally, as shown in Figure 10, a general handheld computer includes a thin main body 1 for installing circuit boards including a CPU board and a rotatable display unit 2 attached along one elongate edge portion of the main body 1. The rotatable display unit 2 covers a whole surface of the main body 1 when the computer is closed.

The handheld computer further includes an opening for mounting a keyboard panel 3 on a center portion of the upper surface of the main housing body 1. The rotatable display unit 2 is attached to the main housing body 1 through hinge portions 4 provided along one elongate edge of the upper surface of the main housing body 1.

Further, most of the handheld computers include a pair of sound openings located between the rotatable display unit 2 and the keyboard panel 3 on the upper surface of the main housing body 1. For releasing reproduces sound outside of the main housing body 1 through the sound openings, a pair of sound reproducing units 5 is provided in the main housing body 1 with facing to the respective sound openings.

A front side of the upper surface of the housing body 1, i.e., an opposite side of the rotatable display unit, is generally used as a palm rest portion for a user. Thus, since it is required to maintain a height of the palm rest portion as low as possible, it is impossible to provide the sound openings at the front side of the main housing body 1.

Consequently, as mentioned above, most of the conventional handheld computer provides speaker openings adjacent to the hinge portions for attaching the rotatable display unit on the upper surface of the main housing body 1.

Further, the speaker units 5 are mounted in the main body so as to keep the same surface plane for the top surface plane of the keyboard device 3 for achieving an enhanced compactness of the total width of the handheld computer when the rotatable display unit has been closed.

Consequently, as shown in Figure 11, when the rotatable display unit has been closed, the sound openings for the speaker units 5 are completely sealed by both of the closed display unit 2 and the sidewalls of the main housing body 1.

Thus, when the rotatable display unit 2 has been closed, it has been impossible to use the conventional handheld computer as a sound data reproducing apparatus of a fine and a sufficient sound because the sound openings are completely sealed.

So far, the handheld computer has been designed to release sound only when the rotatable display unit 2 has been opened. Thus, a sound data reproducing application software is executed with based on an operating system (OS) provided in a CPU when the rotatable display unit 2 has been opened. Consequently, when the display unit 2 is closed, the sound data reproducing application software has never executed.

However, as described above, for using the handheld computer as a sound data reproduction apparatus for multimedia, it is required to execute the sound data reproducing application software even when the display unit has been closed. Thus, there is strong demand for developing such a handheld computer having a sound data reproducing function for the fine sound data, such as a CD-ROM or a DVD-ROM and so on.

However, as mentioned above, the conventional handheld computer has a problem for releasing reproduced fine sound with a sufficient volume and a good tone quality during when the display unit has been closed.

In order to solve the problem, it has been proposed to provide the sound releasing openings in a front sidewall of the main housing body 1 of a handheld computer. However, in order to provide this type of sound releasing opening structure in the front sidewall, it is inevitable to increase a height for the front wall. This is contrary to a demand for keeping the palm rest portion as low as possible. Thus, it is impossible to apply such a structure for the speaker openings in a front sidewall of the main housing body 1 for the handheld computer for achieving a required enhancement of a thinner and a compact sizing of the housing body.

Another type of the sound releasing structure for a handheld computer has been suggested to provide the sound releasing openings at outer area that is exposed at an outside of the display unit when it is closed. To achieve this type of structure for the sound releasing openings, it is necessary to make the housing body larger than the display unit. Thus, it is also impossible to apply the proposed sound releasing structure to a handheld computer that is required to enhance a smaller sizing of the body.

### SUMMARY OF THE INVENTION

Accordingly, it is one object of the present invention to solve the abovementioned problems and defects of handheld electronic equipment having a thin main housing body.

Another object of the present invention to provide a novel sound releasing acoustic structure for a handheld electronic device and method for releasing a fine sound in a sufficient volume and in a good tone quality from a handheld electronic device of a thin housing body.

A further object of the present invention to provide a novel sound releasing acoustic structure and a method for releasing reproduced sound in a sufficient volume and in a good tone quality through a handheld electronic device even when a display unit is closed.

A still further object of the present invention to provide a novel handheld computer having an acoustic structure that can transfer a fine sound generated by sound reproducing units of a high performance outside of a housing body for the sound reproducing units.

These and other objects are achieved according to the present invention by providing a handheld electronic device that comprises a thin housing body defining an upper surface and a pair of sidewalls of a small height; a rotatable display unit attached along one elongate edge on the upper surface of the thin housing body, the display unit has a shape for substantially covering the upper surface of the thin housing body when it is closed; a keyboard panel provided in a substantial center portion of the upper surface of the thin housing body; sound releasing acoustic structure comprising at least one first sound opening provided between the rotatable display unit attached along one elongate edge on the upper surface and at least one second sound opening provided in the sidewalls and a speaker unit provided in the housing body for facing to the sound releasing acoustic structure.

Preferably, one edge of the first sound opening of the sound releasing acoustic structure is coupled to one edge of the second sound opening so as to construct an U-shaped groove partially cut off the housing body.

Further preferably, the second sound opening has an inwardly inclined surface to the contacting of said first sound opening for releasing sound as sufficient as possible.

A speaker unit included in the housing body is preferably to be positioned in parallel to the upper surface of said housing body or inclined for facing to the second sound opening. A speaker net may be provided for covering the first and second sound openings.

In another embodiment, the handheld electronic device may include a bridge connecting between the one edge of the first sound opening and the one edge of the second sound opening along the shorter edge of the housing body.

Preferably, the sound releasing acoustic structure is provided between the rotatable display unit and the keyboard unit provided on the upper surface of the housing body..

In a further embodiment, a handheld computer includes a thin housing body including an upper surface defining one elongate edge and two shorter edges and two side walls of a small height integrally formed at the two shorter edges; a keyboard unit provided in an opening defined in the upper surface of the thin housing body; a rotatable display unit attached along the one elongate edge on the upper surface, the display unit has a shape for substantially covering the upper surface when it is closed; a pair of sound releasing acoustic structures, each comprising a first sound opening provided in the upper surface partially along the one elongate edge of the upper surface and a second sound opening provided in each of the two side walls so as to be positioned adjacent to the first sound opening, and a pair of speakers unit provided in the housing body for releasing sound outside of the housing body through both of the first sound opening and the second sound opening, respectively.

Preferably, each of the pair of sound releasing acoustic structures is comprised of a first sound opening partially cut off the upper surface along the one elongate edge and a second sound opening partially cut off the side wall of the housing body.

Preferably, the first and second sound openings are formed to construct an U-shaped groove for releasing sound both of the upper and the side directions.

A pair of speaker units is provided in each of the U-shaped groove in the housing body so as to be parallel to the upper surface or to incline for facing to the second sound releasing opening. A pair of speaker nets may be provided on each of the pair of sound releasing acoustic structures.

Preferably, the handheld computer has a pair of sound releasing acoustic structure provided between the rotatable display unit and the keyboard unit along the one elongate edge of the housing body.

According to the inventive method for providing a sound releasing acoustic structure for a handheld electronic device having a keyboard panel provided in a thin housing body and a rotatable display unit provided along one elongate edge of an upper surface of the thin housing body, a first sound opening is provided on an upper surface of the housing body by partially cutting off the upper surface along the one elongate edge, and a second sound opening is provided by partially cutting off a side wall of the housing body so as to be coupled to the first opening. A speaker unit is provided in the thin housing body facing to the first or the second openings in order to release sound through the first and the second sound openings.

Goals and advantages of the present invention appears in the following description, and will obvious from that description or by practicing the present invention.

### BRIEF DESCRIPTION OF THE DRWAINGS

A more complete appreciation of the present invention and its many of attendant advantages thereof will be readily obtained as the same becomes better understood by reference to the following detailed description when considered in connection with the accompanying drawings, wherein:
Figure 1 is a perspective view of a handheld computer of a preferred embodiment of the present invention.
Figure 2 is an enlarged perspective view of a sound opening acoustic structure partially cut off from the handheld computer shown in Figure 1.
Figure 3 is a cross-sectional view of the handheld computer shown in Figure 2 for depicting the sound reproduction unit when the display unit is closed.
Figure 4 is an enlarged perspective view of another embodiment of the sound opening acoustic structure partially cut off from the handheld computer shown in Figure 1.
Figure 5 is a cross-sectional view of the handheld computer shown in Figure 4 for depicting the sound reproduction unit when the display unit is closed.
Figure 6 is a perspective view of a speaker cabinet for using in a preferred embodiment shown in Figure 5.
Figure 7 is a perspective view of a handheld computer of another embodiment of the present invention.
Figure 8 is an enlarged perspective view of a sound opening acoustic structure partially cut off from the handheld computer shown in Figure 7.
Figure 9 is a perspective view of a handheld computer of still another embodiment of the present invention.
Figure 10 is a perspective view of a handheld computer that is so far in a general use.
Figure 11 is a cross-sectional view of the handheld computer shown in Figure 10 for depicting the sound reproduction unit when the display unit is closed.

### DESCRIPTION OF THE PREFERRED EMBODIMENTS

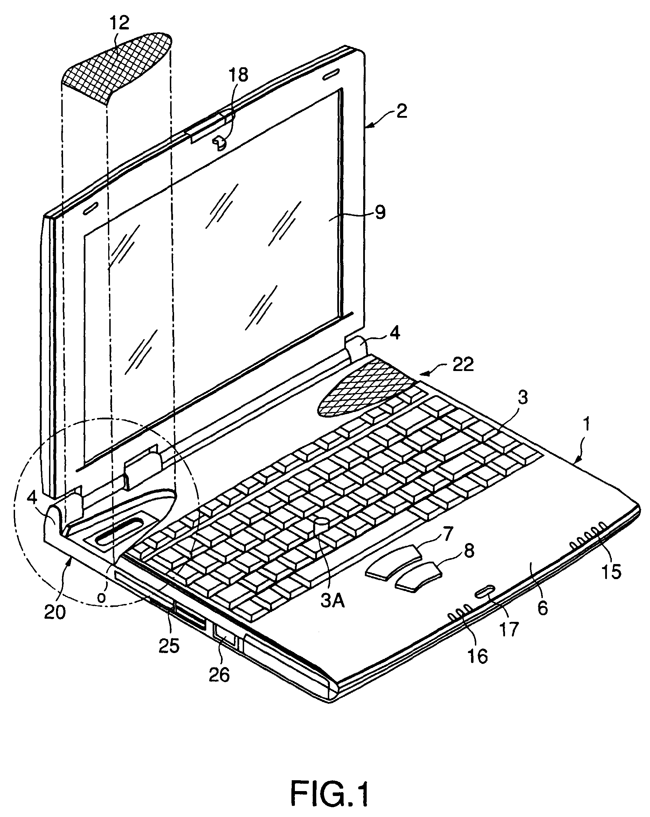

Referring now to the drawings, wherein like reference numerals designate identical or corresponding parts throughout the several views, and more particularly to Figure 1 thereof, a handheld computer having a thin housing body 1 is shown.

The handheld computer includes thin housing body 1 and a rotatable display unit 2. The main body 1 includes an upper surface for defining a pair of elongate edges and a pair of shorter edges and sidewalls for positioning the upper surface as low as possible. The rotatable display unit 2 is attached on the upper surface along one of the elongate edges so as to cover a whole upper surface of the main body 1 when the computer does not operate.

The main body 1 installs a CPU board. At a substantially center portion in the upper surface of the main body, an opening for mounting a keyboard panel 3 is provided. The mounted keyboard panel 3 in the opening comprises of a plurality of keys including a pointing device 3A at a center portion of the plurality of keys.

A plurality of hinges 4 are provided on the upper surface of the main body 1 along one elongate edge of the upper surface for attaching the rotatable display unit 2 to the main body 1.

A flat surface in a front side portion of the upper surface is used as a palm rest portion 6 for a user's key operations. A pair of click buttons 7 and 8 is provided at a center in the palm rest portion 6 In front of the click buttons, a hole 17 for hooking a latch 18 in the edge portion of a housing for the display unit 2, a first set of indicators 15 for indicating system conditions, and a second set of indicators 15 for indicating key shift conditions are provided along another elongate edge of the upper surface.

The display unit 2 includes a display device 9, e.g., a color LCD(Liquid Crystal Display) and a housing for the display device. The display unit 2 has a shape for substantially covering the upper surface of the housing body 1 when the computer is closed. Preferably, the handheld computer is comprised of a rectangular thin housing body and a similarly rectangular thin display unit.

A pair of sound releasing acoustic structures 20, 22 are provided along the one elongate edge of the main housing body 1 so as to be positioned between the display unit 2 and the keyboard panel 4. Each of the sound releasing acoustic structures 20, 22 has a first opening provided on the upper surface of the main housing body 1 and a second opening provided on a sidewall 10 for the main housing body 1. Each of the sound releasing acoustic structures 20, 22 has a substantially same configuration and they are symmetrically provided along one edge portion of the main body 1 adjacent to the display unit 2. Hereinafter, a construction of the sound releasing acoustic structures 20 is explained for a simplification.

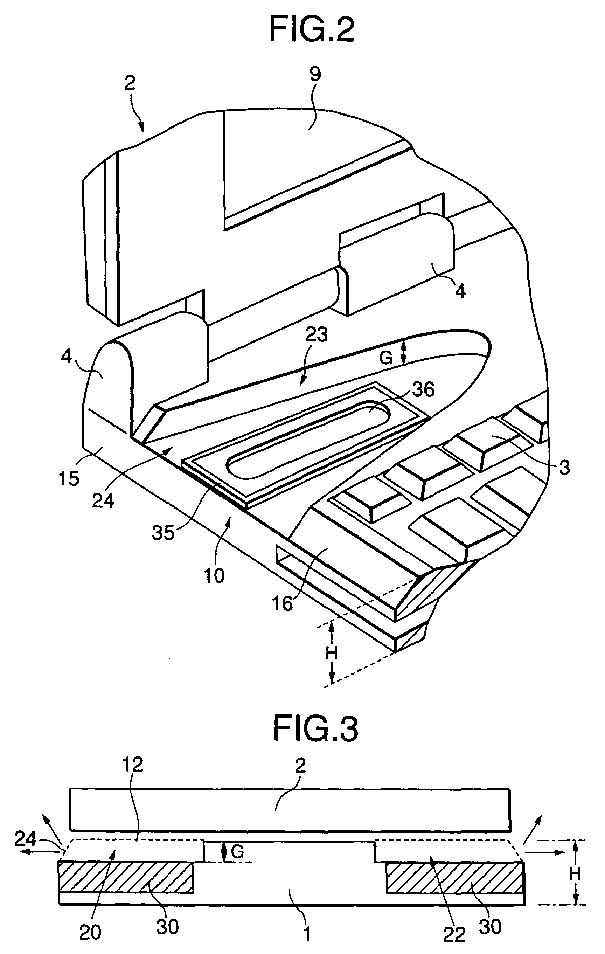

According to the first embodiment of the present invention, as shown in Figure 2, the sound releasing acoustic structures 20 includes a first opening 23 provided on the upper surface of the main housing body 1. Thus, the first opening 23 is constructed by partially cutting off the upper surface of the main housing body 1 along the hinge portion 8 for attaching the rotatable display unit 2. The first opening 23 has an opening edge along one sidewall 10 of the main housing body 1. The opening edge of the first opening 23 constitutes a second opening 24.

Thus, the second opening 24 is constructed by partially cutting off the sidewall 10 of the main housing body 1 along the shorter edge of the upper surface.

As an example, in Figure 2, the first opening 23 takes a U-shaped configuration having a side open edge, and the second opening 24 forms a rectangular configuration having an upper open edge. Each of open edges for the first and the second openings 23 and 24 are united.

Consequently, a united body of the first and the second openings 23 and 24 constitutes a U-shaped sound releasing acoustic groove along the hinge portions 4 for the display unit 2. In this first embodiment, the sound releasing acoustic groove keeps a constant gap width G from a top surface of the main housing body 1. Thus, the first opening 23 keeps a constant depth along the upper surface of the main housing body 1.

As shown in Figure 3, a speaker unit 30 is provided at a bottom portion of the U-shaped sound releasing acoustic groove so as keep in parallel to the first opening 23. The speaker unit 30 includes a speaker body and a cabinet for mounting the speaker body. As shown in Figure 2, the speaker cabinet 35 includes an embedding groove 36 for a speaker. Thus, a surface of the embedded speaker keeps in parallel to the first opening 23 for releasing sound. Preferably, the speaker unit may be of a high performance.

By providing such the sound releasing acoustic structure at both edge portions of the upper surface of the main body 1, as shown in Figure 3, it becomes possible to keep a sound releasing space 20 between the upper surface of the main body and the surface of the display unit 2, even when the display unit 2 has closed. Thus, it becomes possible to release sound reproduced from the speaker unit 30 outside of the housing body 1 through the second opening 24, as depicted in arrows.

As shown in Figures 2 and 3, preferably, the sidewall 10 having a height H includes a perpendicular portion 16 and a slant portion 15. For example, a power switch and a PC card insertion opening are provided on the perpendicular portion 16 of the sidewall 10. Preferably, the second opening 24 of the sound releasing acoustic structures is provided on the slant portion 15 of the sidewall 10 for increasing volume of released sound through the second opening 24 as much as possible.

As shown in Figure 1 in a dragging line, preferably, a speaker net 12 is provided on each of the sound releasing acoustic structures 20 and 22 for protecting the high performance speaker. Thus, the speaker net 12 has a shape of coinciding to the shape of the sound releasing acoustic structure 20. In a preferable embodiment shown in Figure 1, the speaker net 12 has a unit body including a flat portion for covering the first sound opening 23 and a bended portion for covering the second sound opening 24.

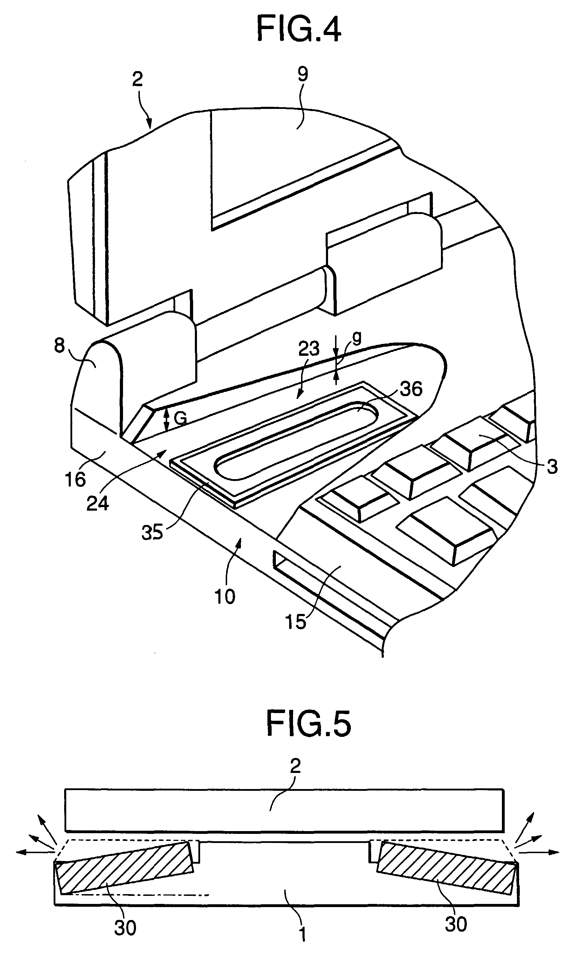

Figures 4 and 5 illustrate a second embodiment of the sound releasing acoustic structure. In this embodiment, the speaker unit 30 is provided in the sound releasing groove with keeping an inclination for facing to the second sound opening 24. Thus, the speaker cabinet 35 is provided in the housing body so as to incline facing to the second sound opening 24. Thus, the depth(gap) of the first sound opening 23 gradually decreases along the upper surface from the edge portion G to a center portion g.

According to the second embodiment, as shown in Figure 5, the pair of speaker units 30 are respectively positioned so as to face the respective second sound openings 24, much more amount of sound is released, even when the display unit 2 is closed.

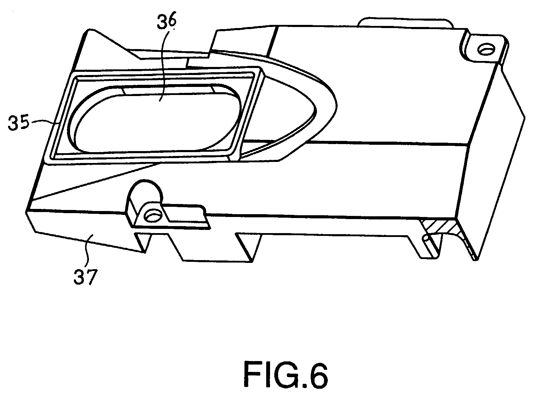

Figure 6 illustrates an example of the speaker cabinet 35 for utilizing the second embodiment. The speaker cabinet 35 includes an inclined edge portion 37 for placing the embed speaker body in an inclination. Thus, the speaker cabinet 35 has a partially inclined bottom from a center to an edge. This construction can increase sound emission through the second sound opening 24. Consequently, it becomes possible to increase sound volume and tone quality.

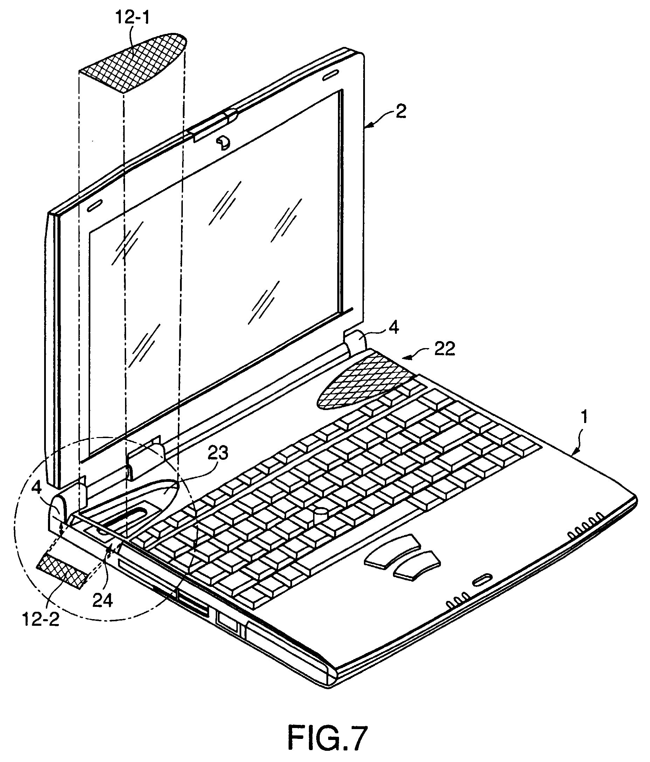

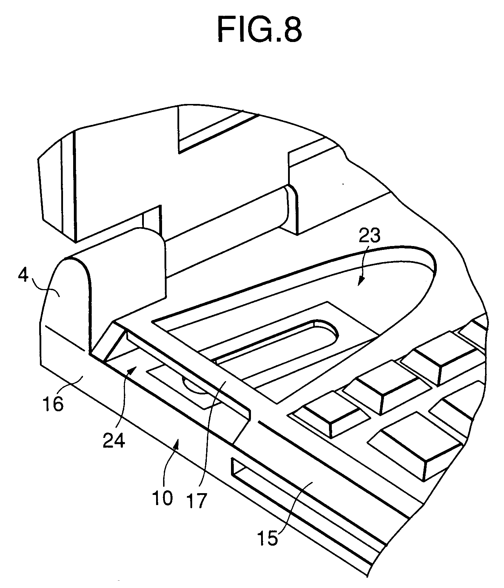

Figures 7 and 8 show a third embodiment of the sound releasing acoustic structure according to the present invention. As the same to the first embodiment, the sound releasing acoustic structure includes the first sound opening 23 and the second sound opening 24. In this embodiment, the united open edge of the first and the second sound openings 23 and 24 includes a bridge portion 17. Thus, the bridge portion 17 clearly defines the first sound opening 23 and the second sound opening 24.

As the same to the first embodiment, a speaker unit 30 is provided in the groove for releasing sound. It is, of course, possible to place the speaker unit 30 in parallel to the first sound opening 23 or in an inclination for facing to the second sound opening 24. By providing the bridge portion 17, it becomes possible to enhance the rigidity of the main housing body 1.

In this embodiment, it is possible to make the speaker net 12 for covering the sound releasing acoustic structure also is divided into two parts. A first net 12-1 covers the first sound opening 23, and a second net 12-2 covers the second sound opening 24, separately. This acoustic structure increases rigidity of the sound releasing acoustic structure.

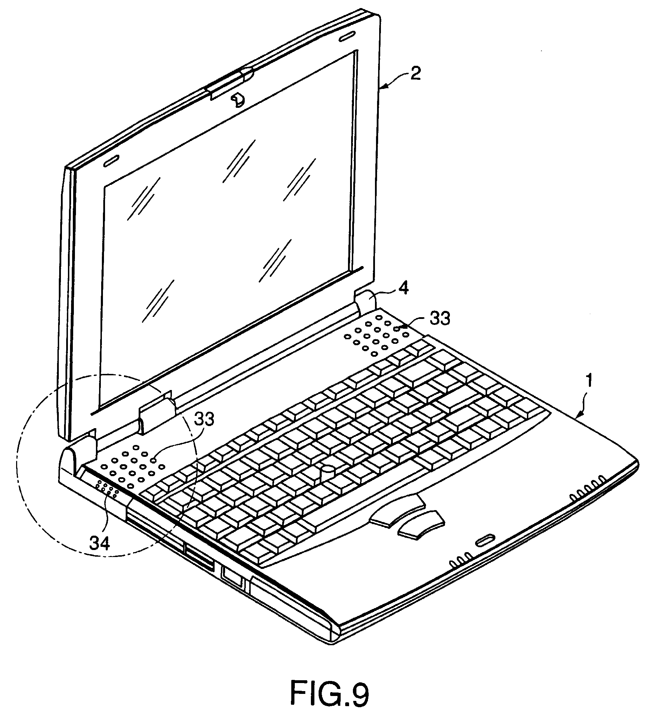

Figure 9 shows a fourth embodiment according to the present invention. In this embodiment, the sound releasing acoustic structure is integrated with the upper surface of the housing body. Thus, a first set of plurality of sound releasing apertures 33 are provided on the upper surface along the hinge portion for the display unit. Further, a second set of plurality of sound releasing apertures 34 are provided on the sidewall of the housing body. These apertures roles as a speaker mask.

All embodiments explained above are characterized in that the sound releasing acoustic structure has two directional output openings for each of speakers. Further, this inventive structure is achieved without increasing the width of the main housing body or without increasing the height of the main housing body. Thus, it can provide a handheld computer having a fine sound releasing acoustic structure with keeping the thin housing body.

As explained above, the inventive acoustic structure for the handheld computer can release fine sound from a speaker unit without damaging or deteriorating its sound volume and tone quality of a high performance even when the display unit is closed.

## Claims

1. A sound releasing acoustic structure for a handheld electronic device which comprises:
a thin housing body defining an upper surface and a pair of sidewalls of a small height; and
a rotatable display unit attached along one elongate edge on said upper surface of said thin housing body, said display unit having a shape for substantially covering said upper surface of said thin housing body when it is closed;
characterized in that said sound releasing acoustic structure comprises:
a first sound opening provided on said upper surface of said thin housing body and a second sound opening provided in one of said sidewalls; and
a speaker unit provided in said housing body for facing to said sound releasing acoustic structure.

2. The device of claim 1, wherein said first sound opening and said second sound opening are integrally constructed.

3. The device of claim 1 or 2, wherein said second sound opening has an inwardly inclined surface to said first sound opening.

4. The device of any one of claims 1 to 3, wherein said speaker unit is provided in parallel to said upper surface so as to face said first sound opening in said housing body.

5. The device of any one of claims 1 to 3, wherein said speaker unit is provided in an inclination to said upper surface so as to face said second opening in said housing body.

6. The device of any one of claims 1 to 5, further comprising a speaker net provided on said sound releasing acoustic structure.

7. The device of claim 2, wherein said integrated structure forms an acoustic groove having a certain gap.

8. The device of claim 4, wherein said speaker unit includes a speaker body and a speaker cabinet for holding said speaker body in parallel to said first sound opening.

9. The device of claim 5, wherein said speaker unit includes a speaker body and a speaker cabinet for holding said speaker body in an inclination so as to face said second sound opening.

10. The device of claim 6, wherein said speaker net is constructed so as to cover over both of said first and second sound openings, integrally.

11. The device of claim 6, wherein said speaker net is constructed so as to separately cover said first sound opening and said second sound opening.

12. The device of claim 7, wherein said acoustic groove forms a U-shaped groove.

13. The device of claim 1, further comprising a bridge provided in a connecting portion between said first sound opening and said second sound opening.

14. The device of any one of claims 1 to 13, wherein said first sound opening is comprised of a first set of sound releasing apertures provided on said upper surface and said second sound opening is comprised of a second set of sound releasing apertures provided on said sidewall.

15. A handheld electronic device, comprising:
a thin housing body defining an upper surface and a pair of sidewalls of a small height;
a rotatable display unit attached along one elongate edge on said upper surface of said thin housing body, said display unit having a shape for substantially covering said upper surface of said thin housing body when it is closed; and
at least one sound releasing acoustic structure as defined in any one of claims 1 to 14.

16. A handheld computer, comprising:
a thin housing body defining an upper surface and a pair of sidewalls of a small height;
a rotatable display unit attached along one elongate edge on said upper surface of said thin housing body, said display unit having a shape for substantially covering said upper surface of said thin housing body when it is closed; and
a keyboard panel provided in a substantial center portion of said upper surface of said thin housing body;
characterized in that the handheld computer further comprises a pair of said sound releasing acoustic structures each as defined in any one of claims 1 to 14.

17. A method for releasing sound through a handheld electronic device comprising a thin housing body defining an upper surface and a pair of sidewalls of a small height, a rotatable display unit attached along one elongate edge on said upper surface of said thin housing body, said display unit having a shape for substantially covering said upper surface of said thin housing body when it is closed, and a keyboard panel provided in a substantial center portion of said upper surface of said thin housing body, comprising the steps of:
providing a first sound opening so as to be located between said attached display unit and said keyboard panel on said upper surface of said housing body;
providing a second sound opening on said sidewall of said housing body; and
positioning a speaker unit in said thin housing body so as to release sound through both of said first and second sound openings.
